(19) Europäisches Patentamt
European Patent Office
Office européen des brevets

(11) **EP 3 021 284 A1**

(12) **EUROPEAN PATENT APPLICATION**

(43) Date of publication:
**18.05.2016 Bulletin 2016/20**

(51) Int Cl.:
*G06T 11/20* (2006.01)

(21) Application number: **14306824.5**

(22) Date of filing: **17.11.2014**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**

(71) Applicant: **Thomson Licensing
92130 Issy-les-Moulineaux (FR)**

(72) Inventors:
• **Eluard, Marc
35576 Cesson-Sévigné (FR)**
• **Maetz, Yves
35576 Cesson-Sévigné (FR)**

(74) Representative: **Huchet, Anne
Technicolor
European Patent Operation
1-5, rue Jeanne d'Arc
92443 Issy-les-Moulineaux cedex (FR)**

(54) **Method and device for displaying a chaptered media**

(57)     The invention relates to a method, performed by a computer, for displaying a chaptered media. The method comprises displaying a chapter of the chaptered media as a first graphical element wherein at least one graphical characteristic of the first graphical element depends on a metric obtained from information representative of the chapter.

The invention further relates to a device for implementing the method and a computer program product.

Figure 3

**Description**

1. FIELD OF THE INVENTION

In the following, a method for displaying a chaptered media is disclosed. Such displaying is useful to provide convenient access to parts of a media, that can be a video, a movie, or even a text. The method only assumes that the media contains a basic structure. Corresponding device is also disclosed.

2. BACKGROUND OF THE INVENTION

This section is intended to introduce the reader to various aspects of art, which may be related to various aspects of the present invention that are described and/or claimed below. This discussion is believed to be helpful in providing the reader with background information to facilitate a better understanding of the various aspects of the present invention. Accordingly, it should be understood that these statements are to be read in this light, and not as admissions of prior art.

Methods are known for displaying chaptered media. For instance, a chaptered media is a movie in a DVD where direct access to chapters is displayed from the menu. In other examples, the chaptered media is an ebook or a music, where chapters are movements or any subdivision of a music sheet. In yet another example, the chaptered media is a movie script, where chapters are scenes. With a limited number of chapters, the user will easily access any searched chapter. However, when the number of chapters increases, the navigation between the chapters is more difficult for the user : either all the chapters are represented together in a single page and the area dedicated to a single chapter may become very small and extremely difficult for a user to interpret, or chapters are represented on different pages and extra navigation is required between pages, so that a single chapter access may become a painful task.

More specifically, in cinema, as in TV drama, the script is a document containing the data necessary for a movie creation such as for example dialogs of actors, a description of the actions happening, the location where the action takes place, the time of the day. A script is always cut into several pieces which are called scenes. A scene defines an element that takes place in the same unity of time and space. The number of scenes in a script varies and depends on the duration and the rhythm of the movie. For example, the short movie "Tears of Steel" lasts twelve minutes and is composed of twelve scenes. The movie "Star Wars Episode IV: A New Hope " lasts one hundred and twenty one minutes and is comprised of four hundred and eighty one scenes. More classical values are one hundred twenty scenes for a ninety minutes movie. For example, the movie "Smokey and the Bandit" lasts ninety six minutes for one hundred seven scenes.

The prior art, consisting of script edition tools, poorly manages the representation and navigation within scenes, although scenes are important parts of the script and require convenient access during the movie creation. Some existing systems display a box listing all the scenes (as a line of text) that allows a direct access to scenes in the script. In some other systems, the script is fully visible and to find or access a particular scene, it is necessary to know its number. In all the cases the script editing tools represent the scenes in the chronological order of the movie (meaning in the order the scenes will be played while playing the final movie).

The prior art also describes solutions where pictures may be used to represent a scene. For instance in US patent US8583605 (Media production application), pictures are used to represent the scenes. The picture is chosen by the user to represent a particular location and every scene in this location is characterized by this picture. However for long movies, containing a lot of scenes, but only a few locations, all the scenes from the same location will be represented by the same picture, which will not provide a level of differentiation allowing an easy navigation between scenes. Another example is the DVD direct chapter access. In that case also a representative picture of the chapter (generally chosen from the video frames of the chapter), is used to represent the chapter. However in practice, the chapters are clustered (by 4 to 8 chapters) and presented in different display screens, so that each picture of each chapter can be recognized by users. In addition, this system does not scale to movies that include more than one hundred scenes, which is the general case. Moreover such an approach can only be used when the movie has been created. It cannot be used for a movie script as the video sequences have not been created yet.

Using prior art movie script editing tools, it is really difficult to navigate between the scenes, only a number and a more or less abstruse text or a lengthy drop-down list with hundreds of lines allows the user to access a scene in the script. Moreover, by only using a simple list of the scenes, a set of numbers, or a set of unstructured pictures, it is very difficult for a reader to visualize a detailed representation of the script. There is a need for a simple and visual way to navigate through several hundreds of scenes that compose a script. This method should help the user to build a visual representation of the script that will improve the navigation. It could also be used to detect some aberrations that may be in the script, such as a large part of the movie without any character.

3. BRIEF SUMMARY OF THE INVENTION

A salient idea is to create a synthetic representation of the script, where graphical elements are used to represent the chapters. The graphical elements are differentiated by capturing representative information of a scene, to provide a condensed visualization of it, therefore allowing the reader to build a visual representation of the succession of scenes. Graphical elements are differentiated by determining individual graphical characteristics for each scene, that depend on at least one metric obtained from information representative of the scene. Advantageously, making each graphical element clickable allows to enhance the navigation between scenes as it enables powerful user interfaces for navigating in a script.

To this end, the invention relates to a method, performed by a computer, for displaying a chaptered media, comprising displaying a chapter of the chaptered media as a first graphical element wherein at least one graphical characteristic of the first graphical element depends on a metric obtained from information representative of the chapter.

According to a particularly advantageous variant, the graphical element is a geometric form and the graphical characteristic is chosen from:

- a fill color;
- a border color;
- a geometric form parameter.

In a preferred embodiment, the metric is computed as a function of at least one local parameter representative of the chapter and at least one global parameter representative of the chaptered media.

According to other variants, the global parameter is a value of the local parameter computed for said chaptered media or the global parameter is a maximum of a set of values where each value of this set is the local parameter for each of the chapters.

According to other variants, the local parameter is chosen from:

- a number of characters having a dialog in a chapter;
- a number of characters present in a chapter;
- a number of words of dialog in a chapter.

In another preferred embodiment, the method further comprises displaying at least one second graphical element for a chapter in the case where a character is present in the chapter, wherein each of the second graphical elements corresponds to the character in the chaptered media.

According to a particularly advantageous variant, the second graphical element corresponding to a character is displayed at a constant position above the first graphical element.

According to another particularly advantageous variant, the second graphical element corresponding to a character is displayed with a constant color above the first graphical element.

According to another particularly advantageous variant, a color of said second graphical element corresponding to a character is merged with a color of another second graphical element corresponding to other character of the chapter.

According to another particularly advantageous variant, characters corresponding to second graphical elements belong to a subpart of the characters of the chaptered media.

According to another particularly advantageous variant, the characters are ranked according to at least one criteria and at least one graphical characteristic of the second graphical element corresponding to the character depends on the rank of this character.

In a second aspect, the invention is directed to a device for displaying a chaptered media comprising means for displaying a chapter of the chaptered media as a first graphical element wherein at least one graphical characteristic of the first graphical element depends on a metric obtained from information representative of the chapter.

In a preferred embodiment, the metric is computed as a function of a local parameter representative of the chapter and a global parameter representative of the chaptered media.

In another preferred embodiment, the device further comprises means for displaying at least a second graphical element for a chapter in the case where a character is present in this chapter, wherein each of the second graphical elements corresponds to the character in the chaptered media.

In a third aspect, the invention is directed to a device comprising at least one processor adapted to compute the steps of the displaying method in any of its embodiments.

In a fourth aspect, the invention is directed to a computer-readable storage medium storing program instructions computer-executable to perform the disclosed methods.

In a fifth aspect, the invention is directed to a computer program product comprising instructions of program code for execution by at least one processor to perform the disclosed methods.

While not explicitly described, the present embodiments may be employed in any combination or sub-combination. For example, the invention is not limited to the described parameters or graphical elements.

Besides, any characteristic or variant described for the displaying method is compatible with a device intended to process the disclosed method, with a computer-readable storage medium storing program instructions, and with a computer program product.

## 4. BRIEF DESCRIPTION OF THE DRAWINGS

In the drawings, two embodiments of the present invention are illustrated:

- **Figure 1** depicts a processing device for displaying chaptered media according to a specific and non-limitative embodiment of the invention;
- **Figure 2** represents an exemplary architecture of the processing device of figure 1 according to a specific and non-limitative embodiment of the invention;
- **Figure 3** represents a flow chart of a method for displaying a chaptered media according to a specific and non-limitative embodiment of the invention;
- **Figure 4** represents a more detailed flow chart of a method for displaying a chaptered media according to a specific and non-limitative embodiment of the invention;
- **Figure 5** represents possible examples of displaying a chaptered media according to a specific and non-limitative embodiment of the invention described in figure 4;
- **Figure 6** represents a flow chart of a method for displaying a chaptered media according to another specific and non-limitative embodiment of the invention;
- **Figure 7** represents a possible example of displaying a chaptered media according to a specific and non-limitative embodiment of the invention, described in figure 6;
- **Figure 8** represents another possible example of displaying a chaptered media according to a specific and non-limitative embodiment of the invention, described in figure 6;
- **Figure 9** represents another possible example of displaying a chaptered media according to a specific and non-limitative embodiment of the invention, described in figure 4.

## 5. DETAILED DESCRIPTION OF THE INVENTION

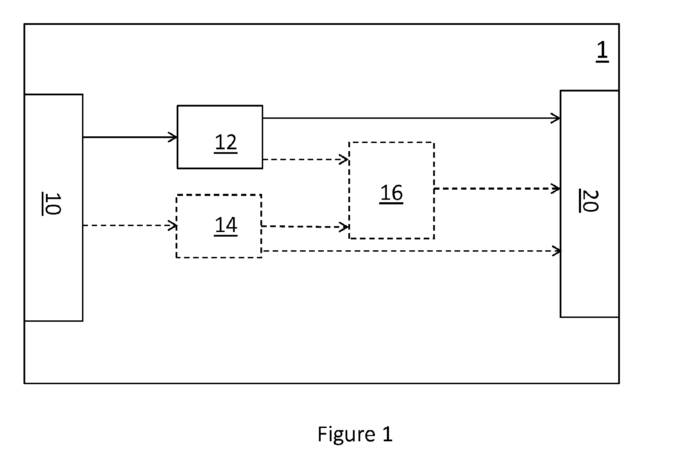

**Figure 1** depicts a processing device 1 for displaying a chaptered media as a set of graphical elements where the graphical characteristic of a graphical element depends on a metric obtained for the corresponding chapter.

According to a specific and non-limitative embodiment of the invention, the processing device 1 comprises an input 10 configured to receive information describing at least one chapter of a chaptered media. The information describing a chapter of a chaptered media is obtained from a source. As discussed there exists a wide range of chaptered media. In non-limitative examples, the chaptered media is a DVD with chapters or an ebook or a music (where chapters could be movements or any subdivision of a music sheet). In the remaining of the document we will describe the chaptered media as a movie script, where chapters are scenes, but the invention is applicable to any kind of chaptered media. According to different embodiments of the invention, the source belongs to a set comprising:

- a local memory, e.g. a video memory, a RAM, a flash memory, a hard disk ;
- a storage interface, e.g. an interface with a mass storage, a ROM, an optical disc or a magnetic support;
- a communication interface, e.g. a wireline interface (for example a bus interface, a wide area network interface, a local area network interface) or a wireless interface (such as a IEEE 802.11 interface or a Bluetooth interface).

The input 10 is linked to a processing module 12 configured to generate a set of first graphical elements for the chapters from data describing each chapter. These graphical elements are sent to a video display via an output 20. In a variant, the graphical elements are stored in a memory or sent to a destination. As an example, such information is stored in a remote or in a local memory, e.g. a video memory or a RAM, a hard disk. In a variant, the information is sent to a storage interface, e.g. an interface with a mass storage, a ROM, a flash memory, an optical disc or a magnetic support and/or transmitted over a communication interface, e.g. an interface to a point to point link, a communication bus, a point to multipoint link or a broadcast network.

According to another specific and non-limitative embodiment of the invention, the processing device 1 comprises an optional processing module 14 (represented on the figure in dotted lines), that generates a set of second graphical elements. First and second graphical elements are merged by an optional processing module 16 (also represented on the figure in dotted lines) and sent to a video display via an output 20. In a variant, the second graphical elements generated by the processing module 14 are directly sent to video display via an output 20.

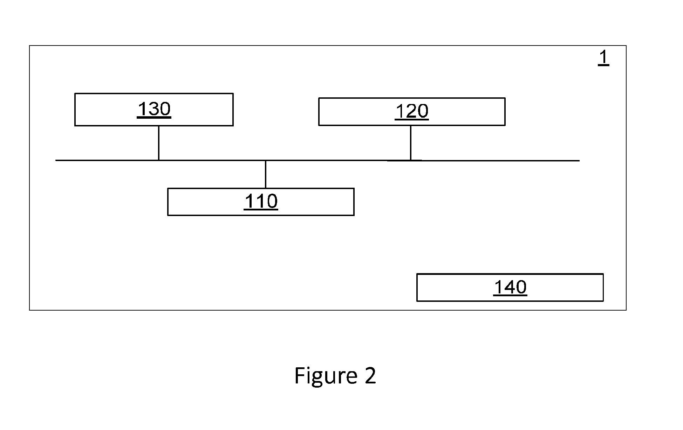

**Figure 2** represents an exemplary architecture of the processing device 1 according to a specific and non-limitative embodiment of the invention. The processing device 1 comprises one or more processor(s) 110, which is(are), for example, a CPU, a GPU and/or a DSP (English acronym of Digital Signal Processor), along with internal memory 120 (e.g. RAM, ROM, EPROM). The processing device 1 comprises one or several Input/Output interface(s) 130 adapted to display output information and/or allow a user to enter commands and/or data (e.g. a keyboard, a mouse, a touchpad, a webcam, a display); and a power source 140 which may be external to the processing device 1. The processing device 1 may also comprise network interface(s) (not shown).

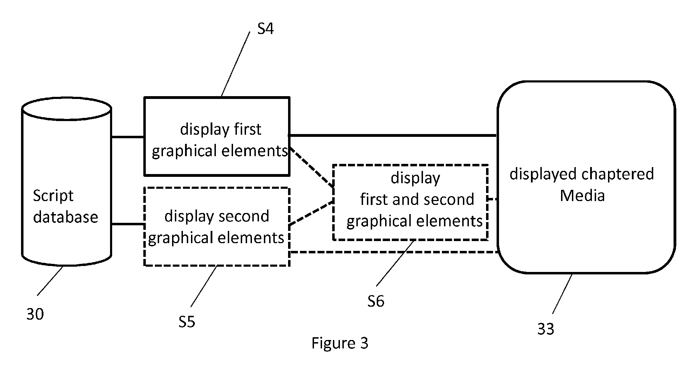

According to an exemplary and non-limitative embodiment of the invention, the processing device 1 further comprises a computer program stored in the memory 120. The computer program comprises instructions which, when executed by the processing device 1, in particular by the processor 110, make the processing device 1 carry out the processing method described with reference to figure 3. According to a variant, the computer program is stored externally to the processing device 1 on a non-transitory digital data support, e.g. on an external storage medium such as a HDD, CD-ROM, DVD, a read-only and/or DVD drive and/or a DVD Read/Write drive, all known in the art. The processing device 1 thus comprises an interface to read the computer program. Further, the processing device 1 could access one or more Universal Serial Bus (USB)-type storage devices (e.g., "memory sticks.") through corresponding USB ports (not shown).

According to exemplary and non-limitative embodiments, the processing device 1 is a device, which belongs to a set comprising:

- a mobile device ;
- a communication device ;
- a game device ;
- a tablet (or tablet computer) ;
- a laptop ;
- a still picture camera;
- a video camera ;
- an encoding chip;
- a decoding chip;
- a still picture server;
- a video server (e.g. a broadcast server, a video-on-demand server or a web server) ; and
- a video sharing platform.

**Figure 3** represents a flow chart of a method for displaying a chaptered media. Without any limitation or loss of generality, but in order to increase the clarity, the chaptered media is described as a script for a movie, where each chapter is a scene of the movie. The script is stored in a database 30. The database comprises information describing each scene, such as a description of the action that takes place in the scene, the names of the characters that speak in the scene and their corresponding dialogs, and optionally some information about the music (type of music, duration), the location where the scene takes place, some contextual information such as the time of the day where the action takes place. A set of local parameters wherein a local parameter is attached to a scene of the script and a set of global parameters wherein a global parameter is attached to the whole script are extracted from information stored in the database 30. Advantageously both sets of local et global parameters are digital parameters. Those parameters are used for the generation of graphical elements associated to the chapter. According to a variant, this extraction is pre-processed and stored in the database 30; according to another variant, this extraction is processed during the first step S4 of displaying first graphical elements.

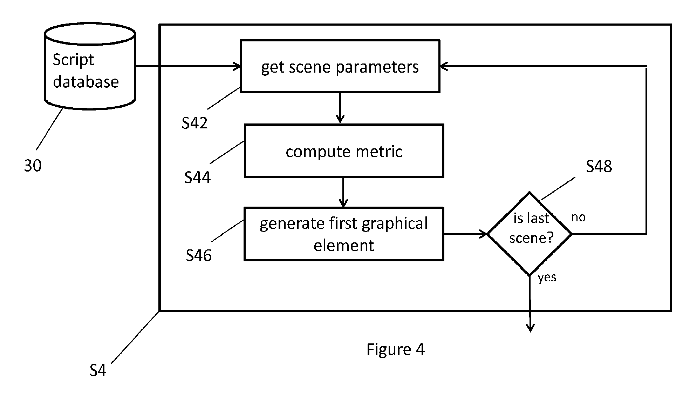

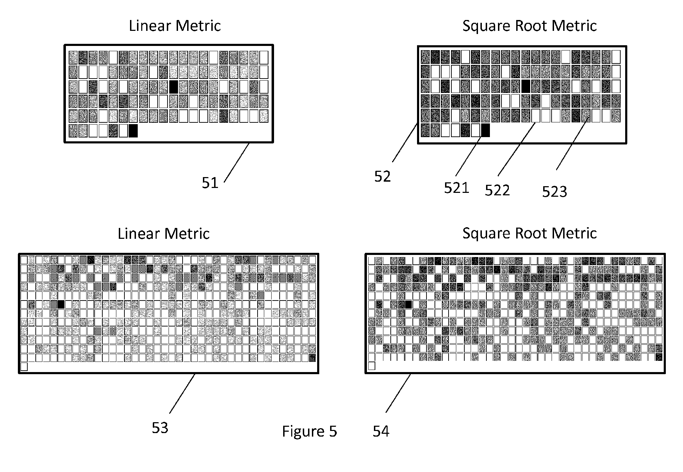

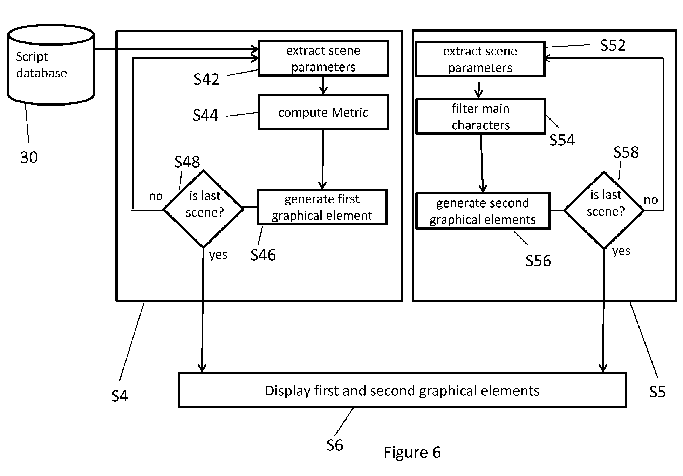

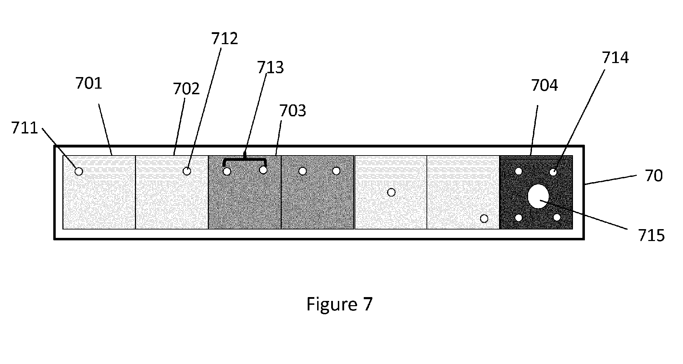

In the step S4, a first graphical element, such as the rectangle 701 as shown on figure 7, is chosen as representative of a chapter of the scene for display, wherein at least one graphical characteristic, such as the level of grey of the rectangle 701, depends on at least one metric obtained from information representative of said chapter. Advantageously, the metric is obtained from the local and global parameters. In an optional step S5 (represented on the figure by dotted lines), the method further comprises displaying at least a second graphical element for a chapter in the case where a character is present in the chapter. In the step S5, a second graphical element such as a white circle 711 at a specific location, as shown in figure 7 is chosen as representative of a specific character. Each second graphical element corresponds to one character in the chaptered media. Still optionally, these two steps are then followed by another step S6 comprising displaying both first and second graphical elements in a single graphical element 70, as shown in figure 7, that is rendered as the displayed chaptered media 33 on a display means. Depending on the situations, the chaptered media is displayed as a set of lines, as shown in figure 5, or as a set of columns of first graphical elements where each first graphical element is optionally merged with at least one second graphical element. Advantageously, first graphical elements are ordered in the set of lines (or columns) according to the chronological order of their corresponding scene in the script. Advantageously, making each graphical element clickable allows to enhance the navigation between scenes as it enables powerful user interfaces for navigating in a script. Various embodiments of steps S4, S5 and S6 are now described, without limitation in the description of figures 4 and 6.

**Figure 4** represents a more detailed flow chart of a method for displaying a chaptered media. The database 30 comprises information describing the script of the movie (for instance location, characters, dialogs, action). According to an exemplary and non-limitative embodiment of the invention there is an iterative process S48 wherein the sub-steps S42, S44, S46 are repeated for the scenes of the script. Advantageously, the iterative process applies to each scene of the script.

In a first sub-step S42, a set of parameters, called local parameters, describing a scene of the script, and a set of parameters, called global parameters, describing the whole script are extracted from information stored in the database 30. In a first variant, a local parameter is the number of characters that have a dialogue in that scene. In another variant, a local parameter is the number of characters that are present in that scene, therefore also including the characters that do not have any dialog. In another variant, a local parameter is the number of words of the dialog between the characters of that scene. Accordingly in a first variant, a global parameter is the number of characters of the whole movie. In another variant, a global parameter is the total number of words of the dialog of the whole movie. In another variant, a global parameter is the maximum value taken by a local parameter over the scenes of the movie in any of the local parameter variant. For instance a global parameter is the maximum number of characters present in any single scene of the movie, or it is the maximum number of words being said in the dialog of any single scene of the movie. Other variants relative to information for local and global parameters representative of a scene or the movie are compatible with the invention.

Then, in a sub-step S44 a metric is computed for each scene by a function of the local parameter corresponding to that scene and the global parameter representative of the script. The metric is a value comprised between 0 and 1. Then, for each scene, a first graphical element is generated in sub-step S46. It comprises determining a geometric form, as for example a rectangle, and its graphical characteristics, such as the size, the border color, and the filling color or texture.

In a first variant of the graphical element, a rectangle 701 as shown in figure 7 is chosen. A first graphical characteristic, such as the size is determined as constant for the whole movie. Another graphical characteristic, such as the filling texture, is also determined as homogeneous for each scene of the movie, and based on the metric. More precisely the RGB value (classical triplet of 8bit integers) of any pixel of the first graphical element is calculated according to the following formula:

$$graphical\_characteristic\_texture(s) = 255 - 255 * metric(s)$$

The result is a value comprised between 0 and 255, that is applied to each of the three components (R,G,B), resulting in a representation using a shade of grey for each scene. Each scene is then represented by a rectangle, whose shade of grey shows the importance of the scene depending on the metric. According to the variant wherein the local parameter is the number of speaking characters in a scene, and the global parameter is the maximum number of speaking characters in a single scene for the whole movie, the metric computed in sub-step S44 is the ratio of the number of speaking characters in that scene over the maximum number of speaking characters in one scene. This metric is called Linear Metric.

$$metric\ (s) = \frac{\#\ character\ in\ s}{Max\ (\#\ character\ in\ scenes)}$$

So that the sub-step S46 of generating a first graphical element comprises determining a rectangle 701 of constant size, whose texture is computed as described above and according to the Linear Metric. Thus, a scene without dialog appears in white since the RGB values are set to 255 and a scene that has the maximum of speaking characters appears in black.

According to another exemplary and non-limitative variant of the metric, called the Square Root Metric, the metric is computed as defined below :

$$metric\ (s) = \sqrt{\left(\frac{\#\ character\ in\ s}{Max\ (\#\ character\ in\ scenes)}\right)}$$

Such an approach is useful for movies including many characters, but only a few present in each scene. It consists in using a kind of logarithmic curve in order to better differentiate the scenes with few characters.

According to another exemplary and non-limitative variant of the metric, called the Quadratic Metric, the metric is computed as defined below

$$metric\ (s) = \left(\frac{\#\ character\ in\ s}{Max\ (\#\ character\ in\ scenes)}\right)^2$$

Such an approach is useful for movies including few characters. It consists in using a kind of exponential curve in order to better differentiate the scenes with small differences in terms of number of characters.

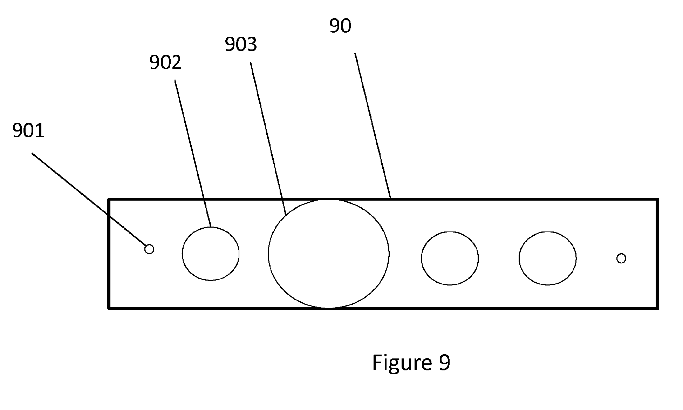

In another variant of the first graphical element, a circle 902, as shown in figure 9, is chosen as a geometric form, whose graphical characteristic, the diameter, is determined according to the following formula :

$$graphical\_characteristic\_diameter(s) = constant * metric(s) + 1$$

where *constant* is any constant integer and *metric(s)* is one of any variants of the metric computed in sub-step S44 described above. According to the variant wherein the local parameter is the number of speaking characters in a scene, and the global parameter is the maximum number of speaking characters in a single scene for the whole movie, and according to the Linear Metric variant, a large circle 903 indicates a scene with many speaking characters, and a smaller circle 902 a scene with fewer speaking characters. Ultimately, a point 901 represents a scene with no character at all.

**Figure 5** provides examples of the results of the method applied to different movies. A first example is an aggregation 51, 52 of first graphical elements 521, 522, 523 for the script of the movie composed of one hundred and seven scenes and a total of forty three characters. In the first example represented in figure 5, the script, i.e the media, is represented as a set 51, 52 of rectangles 521, 522, 523 of uniform color, where each rectangle corresponds to a scene, i.e. a chapter of the media. Using the graphical characteristic defined above, the color palette is a palette of grey colors. According to a variant of the local parameter, a black rectangle 521 represents a scene where all characters are present, a white rectangle 522 represents a scene with no character at all, and a grey rectangle 523 represents a scene with a part of the characters.

A second example is an aggregation 53, 54 of first graphical elements for a movie composed of four hundred eighty one scenes for a total of sixty seven characters are also represented as a set of rectangles of uniform color, where each rectangle corresponds to a scene.

Aggregated 51, 53 first graphical elements both use a Linear Metric as previously described while aggregated 52, 54 first graphical elements both use the Square Root Metric as also previously described. It can be seen, from aggregated elements 53 and 54, that for some movies with a huge number of characters, but only a few present or speaking in any scene, the Square Root Metric provides a better differentiation among the scenes.

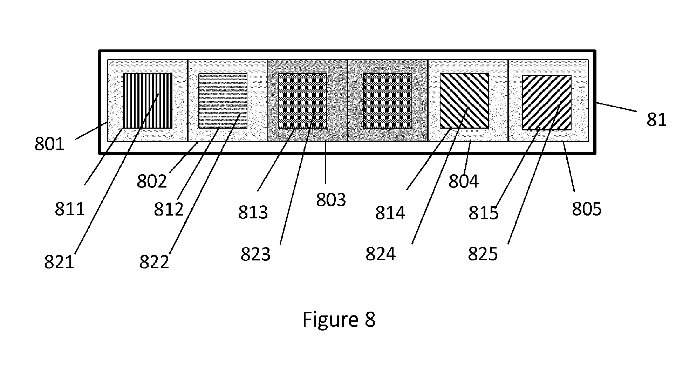

**Figure 6** represents a flow chart of a method for displaying a chaptered media and is described with the examples of graphical elements represented on figures 7 and 8. The database 30 comprises the information describing the script of the movie, including all the different scene information relative to location, characters, dialogs, action. According to a second exemplary and non-limitative embodiment of the invention there is an additional step S5 of displaying at least a second graphical element that can be done in parallel with S4 or in sequence after S4. The step S5 comprises an iterative process S58 wherein the sub-steps S52, S54, S56 are repeated for the scenes of the script. Advantageously, the iterative process applies to each scene of the script.

In a first sub-step S52, parameters of the scene are extracted from information stored in the database 30. In a variant a set of additional parameters, corresponding to individual characters and comprising a criteria allowing to rank the characters among themselves over a scene or over the whole movie, are extracted from information stored in the database 30. In a first variant, a criteria is the importance of the characters in the movie, as decided for example by the script author, therefore allowing to order them in a list according to their relative importance in the script. In another variant, a criteria for ranking a character comprises the ratio of the dialog duration of that character in the movie over the total dialog duration of the movie. In another variant, a criteria for ranking a character comprises the ratio of the presence duration of that character in the movie over the movie duration. In another variant, a criteria for ranking a character comprises the ratio of the number of words of that character's dialog in the movie over the total number of words of the movie dialogs. In yet another variant, a criteria is the importance of the characters in each scene of the script. More precisely, for each scene, a criteria for ranking a character comprises the ratio of its own dialog duration during that scene over the total dialog duration of the scene. In another example a criteria for ranking a character in a scene comprises the ratio of its own number of words said during that scene over the total number of words said by all characters in that scene.

According to a first exemplary and non-limitative variant of the invention, only the main characters of the movie are considered in a filtering sub-step S54. According to any of the variants of the additional parameters extraction in sub-step S52, characters are ordered according to the criteria. Advantageously there is a threshold that is part of the configuration data. This threshold is called "X" in the following. The filtering operation S54 for a scene comprises keeping only the characters belonging to the top X main characters. Then, in a sub-step S56, and for each of the top X main characters a second graphical element is displayed, wherein each second graphical element associated to a character has a constant location in the corresponding first graphical element across the scenes of the movie. For example, and according to a first variant, second graphical elements corresponding to characters are white circles at a defined position. A white circle 711, as shown in figure 7, in the first top left corner corresponds to a first character, and a white circle 712 in the first top right corner corresponds to a second character of the movie. In other words the location of a second graphical element is a way to encode the presence of a given character. If a character of the top X main characters is not present in the scene, its corresponding second graphical element is not displayed. Then the sub-step S56 further comprises a first merge of all the second graphical elements being generated for the top X main characters for that scene. The different second graphical elements corresponding to different characters are located at different locations and advantageously do not overlap. The first merge operation comprises a straightforward addition of the component values of the pixels of the different second graphical elements at their various locations. For instance in figure 7, in the third scene 703 two second graphical elements 713 corresponding to the two top main characters are merged. Then these second graphical elements are processed in a second merge step S6, comprising adding the second graphical elements above the first graphical elements. In other words, where applicable (i.e. non null value), the pixels of the second graphical elements 711, 712 are superimposed on the pixels of the first graphical elements 701, 702. Further examples are illustrated in figures 7 and 8 and described later with more details. Therefore, when both the first graphical element 703 and the set of second graphical elements 713 have been processed in the second merge S6 for a given scene, the presence or absence of a given character is directly noticeable by the presence or the absence of the corresponding white circle, providing a clear visual indicator of the presence of characters in a scene.

According to another variant of the second graphical element generation, individual and constant colors are mapped to characters over the whole movie. Additionally and similarly to the first variant of the second graphical element generation, different locations are used to map second graphical elements to characters over the whole movie, so that the graphical element resulting of the second merge of both the first and second graphical elements in step S6 comprises a set of rectangles of different colors, where a given color at a given position reflects the presence of a given character in a scene.

According to another variant of the second graphical element generation, only the top three main characters are considered in sub-step S54 (X=3). In sub-step S56, each character is then mapped to a second graphical element of the same size and location (across characters and scenes), but using only one of the three main component colors (R,G,B) wherein R is used for a first character, G is used for a second character and B is used for a third character. The presence of a character in the scene is translated into a 1 for the corresponding component (R,G,B). The first merge of the second graphical elements corresponding to characters present in the scene comprises adding the value of each of the R,G,B component value for each pixel. According to this variant the first merge operation of the second graphical elements in sub-step S56 results in 8 possible colors depending on the subset of the three characters present in the scene. For instance, if only the first character is present in the scene, the second graphical element will be uniformly red. If the first and third character appear together, the second graphical element will be purple. Advantageously, the second graphical element, of a smaller size than the first graphical element, is superimposed on the first graphical element in a second merge operation S6, as a subpart of it, so that both levels of information can be represented (shaded grey for the first graphical element, representing the amount of characters, and the color for adding information with regards to which characters are present in the scene).

According to another variant of the second graphical element generation, a picture of a character is used as a second graphical element for that character.

According to another variant of the second graphical element generation, particularly adapted to monochrome environments, a line pattern is used as a second graphical element 821,822 in sub-step S56 to represent a character. For instance, as illustrated on figure 8, a second graphical element made of vertical lines 821 is associated to a first character. Another second graphical element made of horizontal lines 822 is associated to a second character. Another second graphical element made of diagonal downward lines 824 is associated to a third character and another second graphical element made of upward lines 825 is associated to a fourth character, all these lines being merged together in sub-step S56 by adding the value of each of the R,G,B component for each pixel. The result of the second graphical elements first merge 813 is then displayed above the first graphical element 803 in a second merge in step S6 as illustrated in figure 8.

According to another variant of the second graphical element generation, a ratio is computed based on the additional parameter in one of the variants of the parameters extraction S52. For example, and without limitation the ratio is the duration of a character's dialog in the scene over the volume of the dialog of the scene (i.e. taking other characters into account). This additional ratio per character is then used to adjust some characteristic of the corresponding second graphical element for that character. As illustrated on figure 7, this characteristic adjustment can be on the size 715 of the corresponding second graphical element. For example in figure 7, a third character is represented by a greater white circle 715, representing that the third character has more dialogs in that scene. In other variants, the ratio is used to determine the relative position, or the color saturation, or the shade of grey or any other compatible graphical characteristic of the second graphical element associated to the corresponding character.

According to another exemplary and non-limitative variant of the invention, there are configuration parameters of the system allowing to determine some of the different alternatives described in this invention, such as metric computation S44, main character filtering threshold in S54, first and second graphical element generation S46, S56, first and second merge S56, S6, graphical element aggregation S6. Indeed the formulas used for calculating metrics and graphical characteristics for instance greatly affects the information returned to the user. None is better than another, the characterization is different so that the visual representation is sometimes very illustrative, and in other cases is less meaningful. It is therefore interesting that the system implements several graphical characteristics and metrics and that it allows a user to use those that deliver the best results based on the information he gets. Moreover, the system may help the user to choose the most adapted configuration parameters (metrics, graphical characteristics, graphical elements, ...) to the searched representation as shown in figures 7 to 9.

**Figure 7** represents an example of aggregated graphical elements 70, where both first and second graphical elements are merged for each scene. A possible aggregation of merged first and second graphical elements is represented in 70 as a set of rectangles representing seven different scenes. First graphical elements are displayed as different levels of grey rectangles 701, 702, 703, 704 reflecting the ratio of characters present in the scene. Second graphical elements representing characters are displayed as white circles 711, 712, 714, 715 above the rectangles 701, 702, 703, 704 and have a constant position across the scenes. In this example only the top five characters are considered. In the first scene 701, the first character, represented by the white circle 711 is present, in the second scene 702 the second character, represented by the white circle 702 is present. Rectangles 701 and 702 have the same level of grey representing a ratio of 1/5 as one among five characters are present in the scene. In scene 704, all five characters are present. This is represented by five white circles 714, 715 above a dark grey rectangle 704. A greater white circle 715 illustrates the importance of the fifth character in that scene according to one of the variant described before.

**Figure 8** represents another example of aggregated graphical elements 80, where both first and second graphical elements are merged for each scene. A possible aggregation of merged first and second graphical elements is represented in 80, as a set of rectangles 801, 802, 803, 804, 805 in different levels of grey, on which a second rectangle 811, 812, 813, 814, 815 of smaller size and of different texture is displayed. This example illustrates the presence of the top four main characters, where each of the top four characters is mapped to different line patterns. In this example, for the first scene 801, only the first character is present and is displayed as vertical lines 821 in a small rectangle 811 displayed above a grey rectangle 801. For the second scene only the second character is present and is represented by horizontal lines 822 in a small rectangle 812 above a grey rectangle 802. In the third scene 803 both the first and second characters are present and are displayed as both vertical and horizontal lines 823 in a small rectangle 813 above a darker grey rectangle 803. For a following scene, only the third character is present and is displayed as downward diagonal lines 824 in a small rectangle 814 above a grey rectangle 804. For the last scene, only the fourth character is present and is displayed as upward diagonal lines 825 in a small rectangle 815 above a grey rectangle 805.

**Figure 9** represents another example of aggregated first graphical elements 90, as a set of circles 901, 902, 903 of different sizes, representing scenes with different metric values. This example illustrates first graphical elements, wherein its geometric form is a circle, and whose graphical characteristic, the diameter, is determined based on a ratio of the number of characters present in a scene over the maximum number of characters present in any single scene.

A number of implementations have been described. Nevertheless, it will be understood that various modifications may be made. For example, elements of different implementations may be combined, supplemented, modified, or removed to produce other implementations. Additionally, one of ordinary skill will understand that other graphical elements, structures and processes may be substituted for those disclosed and the resulting implementations will perform at least substantially the same function(s), in at least substantially the same way(s), to achieve at least substantially the same result(s) as the implementations disclosed. Accordingly, these and other implementations are contemplated by this application.

**Claims**

1. A method, performed by a computer, for displaying a chaptered media, comprising:

- displaying (S4) a chapter of said chaptered media as a first graphical element (701), **characterized in that** at least one graphical characteristic of said first graphical element (701) depends on a metric obtained from information representative of said chapter.

2. The method according to claim 1, wherein said metric is computed as a function of at least one local parameter representative of said chapter and of at least one global parameter representative of said chaptered media.

3. The method according to one of claims 1 or 2, wherein said first graphical element (701) is a geometric form and at least one graphical characteristic is chosen from:

   - a fill color;
   - a border color;
   - a geometric form parameter.

4. The method according to one of claims 2 or 3 wherein said global parameter is a value of said local parameter computed for said chaptered media.

5. The method according to one of claims 2 or 3 wherein said global parameter is a maximum of a set of values where each value is said local parameter for each of said chapters.

6. The method according to one of claims 2 to 5, wherein said local parameter is chosen from:

   - a number of characters having a dialog in a chapter;
   - a number of characters present in a chapter;
   - a number of words of dialog in a chapter.

7. The method according to claim 6, further comprising displaying (S5) at least one second graphical element (711) for a chapter in the case where a character is present in said chapter, wherein each of said second graphical elements (711) corresponds to said character in said chaptered media.

8. The method according to claim 7, wherein said second graphical element (711) corresponding to said character is displayed (S6) at a constant position above said first graphical element (701).

9. The method according to one of claims 7 or 8, wherein said second graphical element (711) corresponding to said character is displayed (S6) with a constant color above said first graphical element (701).

10. The method according to one of claims 7 or 8, wherein a color of said second graphical element corresponding to said character is merged with a color of another at least one said second graphical element corresponding to other character of said chapter.

11. The method according to one of claims 7 to 10, wherein said characters corresponding to said second graphical elements (711) belong to a subpart of the characters of said chaptered media.

12. The method according to one of claims 7 to 10, wherein:

    - said characters are ranked according to at least one criteria;
    - at least one graphical characteristic of said second graphical element (711) corresponding to said character depends on the rank of said character.

13. A device (1) for displaying a chaptered media comprising:

    - means for displaying (12) a chapter of said chaptered media as a first graphical element (701), **characterized in that** at least one graphical characteristic of said first graphical element (701) depends on a metric obtained from information representative of said chapter.

14. The device (1) according to claim 13, further comprising means for displaying (14,15) at least a second graphical element (711) for a chapter in the case where a character is present in said chapter, wherein each of said second graphical elements (711) corresponds to said character in said chaptered media.

15. A computer program product comprising instructions of program code for execution by at least one processor to perform the method according at least on of claims 1 to 12, when the program is executed on a computer.

Figure 1

Figure 2

Figure 3

Script database

30

get scene parameters

S42

compute metric

S44

generate first graphical element

S46

is last scene?

S48

no

yes

S4

Figure 4

Linear Metric

51

Square Root Metric

52   521  522    523

Linear Metric

53

Square Root Metric

Figure 5    54

Figure 6

Figure 7

Figure 8

Figure 9

Europäisches
Patentamt

European
Patent Office

Office européen
des brevets

# EUROPEAN SEARCH REPORT

Application Number

EP 14 30 6824

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2008/295038 A1 (HELFMAN JONATHAN [US] ET AL) 27 November 2008 (2008-11-27) * paragraphs [0009], [0012], [0013], [0059], [0060]; figure 4 * ----- | 1-15 | INV. G06T11/20 |
| X | CHAO LIANG ET AL: "A Novel Role-Based Movie Scene Segmentation Method", 15 December 2009 (2009-12-15), ADVANCES IN MULTIMEDIA INFORMATION PROCESSING - PCM 2009, SPRINGER BERLIN HEIDELBERG, BERLIN, HEIDELBERG, PAGE(S) 917 - 922, XP019134967, ISBN: 978-3-642-10466-4 * section 2.2; figure 2 * ----- | 1-15 | |
| X,D | US 8 583 605 B2 (ROENNING JEFF [US]) 12 November 2013 (2013-11-12) * column 16, lines 38-60; figure 16 * * column 18, lines 24-31 * ----- | 1-15 | |
| | | | TECHNICAL FIELDS SEARCHED (IPC) |
| | | | G06T G06F |

The present search report has been drawn up for all claims

| Place of search | Date of completion of the search | Examiner |
|---|---|---|
| Munich | 7 May 2015 | Krawczyk, Grzegorz |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

 

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 14 30 6824

This annex lists the patent family members relating to the patent documents cited in the above-mentioned European search report.
The members are as contained in the European Patent Office EDP file on
The European Patent Office is in no way liable for these particulars which are merely given for the purpose of information.

07-05-2015

| Patent document cited in search report | Publication date | Patent family member(s) | Publication date |
|---|---|---|---|
| US 2008295038 A1 | 27-11-2008 | US 2008295038 A1<br>US 2015012552 A1 | 27-11-2008<br>08-01-2015 |
| US 8583605 B2 | 12-11-2013 | US 2011307527 A1<br>US 2014129943 A1 | 15-12-2011<br>08-05-2014 |

EPO FORM P0459

For more details about this annex : see Official Journal of the European Patent Office, No. 12/82

**EP 3 021 284 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 8583605 B